Europäisches Patentamt

European Patent Office

Office européen des brevets

(19)

(11) **EP 1 717 202 A1**

(12) **EUROPEAN PATENT APPLICATION**

(43) Date of publication:
02.11.2006 Bulletin 2006/44

(51) Int Cl.:
$C01B\ 33/18$ (2006.01)    $C03C\ 1/00$ (2006.01)
$C03B\ 19/06$ (2006.01)    $C03B\ 19/10$ (2006.01)
$C03B\ 37/012$ (2006.01)

(21) Application number: 05009479.6

(22) Date of filing: 29.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: Degussa AG
40474 Düsseldorf (DE)

(72) Inventors:
• Oswald Monika
63454 Hanau (DE)

• Meyer Jürgen
63811 Stockstadt (DE)
• Deller Klaus
63512 Hainburg (DE)

(74) Representative: Weber, Wolfgang
Degussa AG
Intellectual Property Management
Patente und Marken
Standort Hanau
Postfach 13 45
63403 Hanau (DE)

(54) **Sintered silicon dioxide materials**

(57)    Sintered materials, especially sintered glasses, produced from pyrogenically produced silicon dioxide which has been processed to silicon dioxide granulates in a compacting step, and the use of such granulates in the production of formed glass bodies.

The granules are prepared by dispersing silicon dioxide in water, spray drying and optionally heating. Pyrogenic silicon dioxide powder with a BET surface area of 30 to 90 $m^2/g$, a DBP index of 80 or less, a mean aggregate area of less than 25000 $nm^2$ and a mean aggregate circumference of less than 1000 nm, wherein at least 70% of the aggregates have a circumference of less than 1300 nm or a high-purity pyrogenically prepared silicon dioxide having metal contents of less than 0.2 $\mu g/g$ is prepared by reacting a silicon tetrachloride having a metal content of less than 30 ppb by means of flame hydrolysis is used as the silicon dioxide for the dispersion.

EP 1 717 202 A1

**Description**

The invention relates to sintered materials (especially sintered glasses), to a process for the production of sintered materials from pyrogenically produced silicon dioxide which has been processed to silicon dioxide granulates by means of a downstream compacting step, and to the use of corresponding silicon dioxide granulates in the production of sintered materials. Examples of such production processes are the production of an aqueous granulate dispersion, transfer of the dispersion into a form, and gelling of the dispersion to a gel body. The latter can be processed to high-quality formed glass bodies by means of a drying process and a sintering process. A further example of such processes is the dry pressing of highly compacted pyrogenically produced silicon dioxide granulate to a solid formed body, and subsequent sintering of the formed body to sintered glass.

It is known to convert silicon alkoxide solutions by the action of an acid into gel bodies, which are dried and then subjected to a sintering step (DE 30 01 792 C2). Such processes are generally called "sol-gel processes". Glasses produced in that manner are to be used according to the invention in the production of preformed bodies for subsequent further processing to optical fibres.

It is also known to use nano-scale powders, such as, for example, pyrogenically produced silicon dioxide, in the production of sintered glass bodies (US-A 5,379,364). In that process, a starting silica having a surface area of less than 100 m$^2$/g is used and a dispersion having a solids content of more than 30 wt.% is prepared. After being transferred to a form, the dispersion is gelled by lowering the pH value. The gel body is then dried to form a green body, which is subjected to a cleaning step and is then sintered. In contrast to the process outlined in DE 30 01 792 C2, processes such as that of US-A 5,379,364 are so-called "colloidal sol-gel processes". The term "colloidal" in this context refers to the presence of finely divided, already pre-compacted silicon dioxide particles. Pre-compaction takes place during the process of preparing the pyrogenically produced silica that is used.

Existing processes in which formed glass bodies are produced according to the mentioned simple "sol-gel process" using only silicon alkoxide solutions have the disadvantage that the gel body shrinks considerably during the drying process and during the sintering process. The shrinkage can amount to from 60 % to over 80 % of the original dimensions of the gel body. That considerable drying and sintering shrinkage results in very fine seeds and cracks within the glass body that is produced, which have an adverse effect on the properties of the product. For example, the optical transmission of such formed glass bodies is reduced considerably by such seeds and cracks and the optical homogeneity is impaired. Because of the correspondingly high optical attenuation, such formed glass bodies cannot be used for the production of high-quality optical fibres. Such "sol-gel processes" also have the disadvantage that the gel body has extremely fine capillaries and pores. The liquid contained in the gel body exerts a high hydrodynamic pressure on the corresponding capillaries during the drying process. That internal pressure likewise leads to the appearance of ultrafine cracks, flaws or seeds during the process of drying the gel body.

As compared with simple "sol-gel processes", so-called "colloidal sol-gel processes" have the advantage that the drying and sintering shrinkage is reduced a little. The reason for that reduced shrinkage is the use of pyrogenically produced silicon dioxide, which permits higher degrees of filling of the oxide in dispersions used for the production of sintered glasses. Nevertheless, the "colloidal sol-gel processes" known hitherto exhibit considerable drying and sintering shrinkage. The shrinkage in the case of those processes still amounts to from 35 % to 50 % of the dimensions of the gel body before drying. However, in order to improve further the optical properties of sintered glasses produced in that manner, a further increase in the degrees of filling of the silicon dioxide powder within the powder-technological production process is required. However, the necessary high degrees of filling cannot be achieved using known pyrogenically produced silicon dioxide powders having a low degree of compaction. The result is that the optical transparency of the preformed body produced therefrom for the subsequent production of optical fibres is poorer than that desired for the final product.

As compared with simple "sol-gel processes", existing "colloidal sol-gel processes" have a slightly improved capillary and pore structure of the gel body. For that reason, when gel bodies produced by means of "colloidal sol-gel processes" are dried, fewer internal ultrafine cracks, flaws or seeds are formed than is the case when gel bodies produced by means of a simple "sol-gel process" are dried. Nevertheless, it is desirable to increase further the degree of filling in the case of the "colloidal sol-gel process" in order further to improve the capillary and pore structure. At the same time, an improvement in the capillary and pore structure can also be achieved by means of novel pyrogenically produced silicon dioxide powders, which are changed in terms of their particle size or their particle structure.

Accordingly, the object was to develop sintered materials in the production of which higher degrees of filling of pyrogenic silicon dioxides are used. At the same time, it was desired to change the particle size of the silicon dioxide used in the production process.

The invention provides sintered materials, especially sintered glasses, which are produced by means of a forming or compacting process, optionally a subsequent cleaning step and optionally a subsequent sintering process, wherein **either** there is used for the production thereof pyrogenically produced silicon dioxide which has been compacted to granulates by means of a downstream compacting step according to DE 196 01 415 A1 and has a tamped density of from 150 g/l to 800 g/l, preferably from 200 to 500 g/l, a granulate particle size of from 10 to 800 $\mu$m and a BET surface area of from 10 to 500 m$^2$/g, preferably from 20 to 130 m$^2$/g, **or** there are used for the production thereof granulates according to DE 196 01 415 A1 or EP 05005093.9 based on pyrogenically produced silicon dioxide having the following physico-chemical data: mean particle diameter: from 10 to 120 $\mu$m, BET surface area: from 40 to 400 m$^2$/g, pore volume: from 0.5 to 2.5 ml/g, pore distribution: less than 5 % of the total pore volume are pores < 5 nm, only meso- and macropores, pH value: from 3.6 to 8.5, tamped density: from 220 to 700 g/l.

In the present invention the following granules based on pyrogenically prepared silicon dioxide and having the following physicochemical properties can be used:

| | |
|---|---|
| Average grain size: | 10 to 120 $\mu$m |
| BET surface area: | 40 to 400 m$^2$/g |
| Pore volume: | 0.5 to 2.5 ml/g |
| Pore size distribution: | less than 5 % of the total pore volume exists of pores with a diameter < 5 nm, rest meso- and macropores |
| pH value: | 3.6 to 8.5 |
| Tapped density: | 220 to 700 g/l |

The granular material to be used in the invention can be prepared by dispersing pyrogenically prepared silicon dioxide in water, spray drying it and heating the granules obtained at a temperature of from 150 to 1,100 °C for a period of 1 to 8 h.

The granular material to be used in the invention preferably has meso- and macropores, with the volume of the mesopores constituting 10 to 80% of the total pore volume.

The particle size distribution of the granular material according to the invention may be 80 vol.% larger than 8 $\mu$m and 80 vol.% smaller than 96 $\mu$m.

In a preferred embodiment of the invention, the proportion of pores smaller than 5 $\mu$m may be at most 5% referred to the total pore volume.

The dispersion in water can have a silicon dioxide concentration of from 5 to 25 wt.-%.

The spray drying can be carried out at a temperature of from 200 to 600 °C Disc atomisers or nozzle atomisers can be used for this purpose.

The heating of the granules can be carried out both in fixed beds, for example chamber kilns, and in moving beds, for example rotary dryers.

The physicochemical variables of the granules, such as the specific surface, the particle size distribution, the pore volume, the tamped density and the silanol group concentration, the pore distribution and pH value can be altered within the specified limits by varying the starting materials and the conditions during spraying and heating.

The metal oxide or metalloid oxide to be used according to the invention can be pyrogenically produced silicon dioxide powder with

- a BET surface area of 30 to 90 m$^2$/g,
- a DBP index of 80 or less
- a mean aggregate area of less than 25000 nm$^2$,
- a mean aggregate circumference of less than 1000 nm, wherein at least 70% of the aggregates have a circumference of less than 1300 nm. This pyrogenically produced silicon dioxide is disclosed in WO 2004/054929.

The BET surface area may preferably be between 35 and 75 m$^2$/g. Particularly preferably the values may be between 40 and 60 m$^2$/g. The BET surface area is determined in accordance with DIN 66131.

The DBP index may preferably be between 60 and 80. During DBP absorption, the take-up of force, or the torque (in Nm), of the rotating blades in the DBP measuring equipment is measured while defined amounts of DBP are added, comparable to a titration. A sharply defined maximum, followed by a drop, at a specific added amount of DBP is then produced for the powder according to the invention.

A silicon dioxide powder with a BET surface area of 40 to 60 m$^2$/g and a DBP index of 60 to 80 may be particularly preferred.

Furthermore, the silicon dioxide powder to be used according to the invention may preferably have a mean aggregate area of at most 20000 nm$^2$. Particularly preferably, the mean aggregate area may be between 15000 and 20000 nm$^2$. The aggregate area can be determined, for example, by image analysis of TEM images. An aggregate is understood to consist of primary particles of similar structure and size which have intergrown with each other, the surface area of which is less than the sum of the individual isolated primary particles. Primary particles are understood to be the particles which are initially formed in the reaction and which can grow together to form aggregates as the reaction proceeds further.

A silicon dioxide powder with a BET surface area of 40 to 60 $m^2/g$, a DBP index of 60 to 80 and a mean aggregate area between 15000 and 20000 $nm^2$ may be particularly preferred.

In a preferred embodiment, the silicon dioxide powder to be used according to the invention may have a mean aggregate circumference of less than 1000 nm. Particularly preferably, the mean aggregate circumference may be between 600 and 1000 nm. The aggregate circumference can also be determined by image analysis of TEM images.

A silicon dioxide powder with a BET surface area of 40 to 60 $m^2/g$, a DBP index of 60 to 80, a mean aggregate area between 15000 and 20000 $nm^2$ and a mean aggregate circumference between 600 and 1000 nm may be particularly preferred.

Furthermore, it may be preferable for at least 80%, particularly preferably at least 90%, of the aggregates to have a circumference of less than 1300 nm.

In a preferred embodiment, the silicon dioxide powder to be used according to the invention may assume a degree of filling in an aqueous dispersion of up to 90 wt.%. The range between 60 and 80 wt.% may be particularly preferred.

Determination of the maximum degree of filling in an aqueous dispersion is performed by the incorporation of powder, in portions, into water using a dissolver, without the addition of other additives. The maximum degree of filling is achieved when either no further powder is taken up into the dispersion, despite elevated stirring power, i.e. the powder remains in dry form on the surface of the dispersion, or the dispersion becomes solid or the dispersion starts to form lumps.

Furthermore, the silicon dioxide powder to be used according to the invention may have a viscosity at a temperature of 23°C, with respect to a 30 wt.% aqueous dispersion at a rate of shear of 5 rpm, of less than 100 mPas. In particularly preferred embodiments, the viscosity may be less than 50 mPas.

The pH of the silicon dioxide powder to be used according to the invention may be between 3.8 and 5, measured in a 4% aqueous dispersion.

The process for preparing the silicon dioxide powder to be used according to the invention, is characterised in that at least one silicon compound in the vapour form, a free-oxygen-containing gas and a combustible gas are mixed in a burner of known construction, this gas mixture is ignited at the mouth of the burner and is burnt in the flame tube of the burner, the solid obtained is separated from the gas mixture and optionally purified, wherein

- the oxygen content of the free-oxygen-containing gas is adjusted so that the lambda value is greater than or equal to 1,

- the gamma-value is between 1.2 and 1.8,

- the throughput is between 0.1 and 0.3 kg $SiO_2/m^3$ of core gas mixture,

- the mean normalised rate of flow of gas in the flame tube at the level of the mouth of the burner is at least 5 m/s.

The oxygen content of the free-oxygen-containing gas may correspond to that of air. That is, in this case air is used as a free-oxygen-containing gas. The oxygen content may, however also take on higher values. In a preferred manner, air enriched with oxygen should have an oxygen content of not more than 40 vol.%.

Lambda describes the ratio of oxygen supplied in the core to the stoichiometrically required amount of oxygen. In a preferred embodiment, lambda lies within the range 1 < lambda ≤ 1.2.

Gamma describes the ratio of hydrogen supplied in the core to the stoichiometrically required amount of hydrogen. In a preferred embodiment, gamma lies within the range 1.6 < gamma ≤ 1.8.

The normalised rate of flow of gas refers to the rate of flow at 273 K and 1 atm.

A burner of known construction is understood to be a burner with concentric tubes. The core gases are passed through the inner tube, the core. At the end of the tube, the mouth of the burner, the gases are ignited. The inner tube is surrounded by at least one other tube, the sleeve. The reaction chamber, called the flame tube, starts at the level of the mouth of the burner. This is generally a conical tube, cooled with water, which may optionally be supplied with other gases (sleeve gases) such as hydrogen or air.

The mean, normalised rate of flow of the gas in the flame tube at the level of the mouth of the burner of at least 5 m/s refers to the rate of flow immediately after the reaction mixture leaves the burner. The rate of flow is determined by means of the volume flow of the reaction products in vapour form and the geometry of the flame tube.

The core gases are understood to be the gases and vapours supplied to the burner, that is the free-oxygen-containing gas, generally air or air enriched with oxygen, the combustible gas, generally hydrogen, methane or natural gas, and the silicon compound or compounds in vapour form.

An essential feature of the process is that the mean normalised rate of flow of gas in the flame tube at the level of the mouth of the burner is at least 5 m/s. In a preferred embodiment, the mean normalised rate of flow of the gas in the flame tube at the level of the mouth of the burner assumes values of more than 8 m/s.

The mean rate of discharge of the gas mixture (feedstocks) at the mouth of the burner is not limited. However, it has proven to be advantageous when the rate of discharge at the mouth of the burner is at least 30 m/s.

In a preferred embodiment, additional air (secondary air) may be introduced into the reaction chamber, wherein the rate of flow in the reaction chamber may be raised further.

In a preferred embodiment, the mean normalised rate of flow of gas in the flame tube at the level of the mouth of the burner may be 8 to 12 m/s.

The type of silicon compound used in the process is not further restricted. Silicon tetrachloride and/or at least one organochlorosilicon compound may preferably be used.

A particularly preferred embodiment of the process is one in which

- silicon tetrachloride is used,

- the lambda value is such that $1 < lambda \leq 1.2$,

- the gamma-value is between 1.6 and 1.8,

- the throughput is between 0.1 and 0.3 kg $SiO_2/m^3$ of core gas mixture,

- in addition at least double the amount of air, with respect to the amount of free-oxygen-containing gas introduced into the burner, is introduced into the flame tube and

- the rate of flow of the gas of feedstocks at the mouth of the burner is 40 to 65 m/s (with respect to standard conditions)

- and the mean normalised rate of flow of gas in the flame tube at the level of the mouth of the burner is between 8 and 12 m/s.

In general during the preparation of pyrogenic oxides, the rate of flow of gas in the water-cooled reaction chamber (flame tube) and in the subsequent cooling unit (cooling stretch) is adjusted in such a way that the best possible cooling power, that is to say rapid cooling of the reaction products, is ensured. In principle, it is true that the cooling power increases with decreasing rate of flow of gas. The lower limit is simply based on the requirement of still being able to transport the product through the pipes with the gas stream.

It was demonstrated that although a considerable increase in the rate of flow of gas in the reaction chamber resulted in a reduced cooling power, it led to a powder with unexpected properties. Whereas physical characteristics such as BET surface area and DBP absorption are substantially unchanged as compared with powders according to the prior art, the powder exhibits a much lower structure.

Furtheron the metal oxide or metalloid oxide to be used according to the invention can be pyrogenically produced silicon dioxide which is characterised by a metals content of less than 9 ppm.

In a preferred embodiment the high-purity pyrogenically prepared silicon dioxide to be used according to the invention, can be characterised by the following metal contents:

| | | | |
|----|-----|-----|-----|
| Li | ppb | < = | 10 |
| Na | ppb | < = | 80 |
| K | ppb | < = | 80 |
| Mg | ppb | < = | 20 |
| Ca | ppb | < = | 300 |
| Fe | ppb | < = | 800 |
| Cu | ppb | < = | 10 |
| Ni | ppb | < = | 800 |
| Cr | ppb | < = | 250 |
| Mn | ppb | < = | 20 |
| Ti | ppb | < = | 200 |
| Al | ppb | < = | 600 |
| Zr | ppb | < = | 80 |
| V | ppb | < = | 5 |

The total metal content can then be 3252 ppb (~ 3.2 ppm) or less.

In an embodiment of the invention, which is further preferred, the high-purity pyrogenically prepared silicon dioxide can be characterised by the following metal contents:

| Li | ppb | < = | 1 |
|----|-----|-----|-----|
| Na | ppb | < = | 50 |
| K | ppb | < = | 50 |
| Mg | ppb | < = | 10 |
| Ca | ppb | < = | 90 |
| Fe | ppb | < = | 200 |
| Cu | ppb | < = | 3 |
| Ni | ppb | < = | 80 |
| Cr | ppb | < = | 40 |
| Mn | ppb | < = | 5 |
| Ti | ppb | < = | 150 |
| Al | ppb | < = | 350 |
| Zr | ppb | < = | 3 |
| V | ppb | < = | 1 |

The total metal content can then be 1033 ppb (~ 1.03 ppm) or less.

The process for the preparation of the high-purity pyrogenically prepared silicon dioxide is characterised in that silicon tetrachloride is in known manner reacted in a flame by means of high-temperature hydrolysis to give silicon dioxide, and a silicon tetrachloride is used here which has a metal content of less than 30 ppb.

In a preferred embodiment of the invention a silicon tetrachloride can be used which has the following metal contents in addition to silicon tetrachloride:

| Al | less than 1 | ppb |
|----|-------------|-----|
| B | less than 3 | ppb |
| Ca | less than 5 | ppb |
| Co | less than 0.1 | ppb |
| Cr | less than 0.2 | ppb |
| Cu | less than 0.1 | ppb |
| Fe | less than 0.5 | ppb |
| K | less than 1 | ppb |
| Mg | less than 1 | ppb |
| Mn | less than 0.1 | ppb |
| Mo | less than 0.2 | ppb |
| Na | less than 1 | ppb |
| Ni | less than 0.2 | ppb |
| Ti | less than 0.5 | ppb |
| Zn | less than 1 | ppb |
| Zr | less than 0.5 | ppb |

Silicon tetrachloride having this low metal content can be prepared according to DE 100 30 251 or according to DE 100 30 252.

The metal content of the silicon dioxide according to the invention is within the ppm range and below (ppb range).

The invention provides the above-mentioned sintered materials, wherein the mentioned granulates are processed to the sintered material by means of a process of the following type:

a) preparation of a dispersion of granulates having a solids content of from 10 wt.% to 85 wt.%, preferably from 25 wt.% to 70 wt.%, and a polar or non-polar inorganic or organic liquid, preferably water, ethanol or an aliphatic hydrocarbon; then transfer of the dispersion into a form or coating of surfaces with the dispersion, initiation of gelling of the dispersion and drying of the gel body or of the gel-body-like coating. The green body obtained after the drying operation, or the green-body-like coating, can optionally be cleaned with gaseous substances, such as chlorine or thionyl chloride, at temperatures of from 700 to 1000°C and then optionally be sintered by means of a sintering step at a temperature of from 1000 to 1800°C, preferably from 1100° to 1600°C, in such a manner that the resulting sintered body/the sintered surface is fully dense-sintered or is still partially porous.

b) introduction of corresponding granulates, without the aid of a liquid, into a form or application of the granulates to a surface, then optionally a further compacting step in which the formed body or the layer is pressed under a high external mechanical pressure (pressing pressure e.g. from 1 to 120 MPa) in the presence of atmospheric pressure or at reduced pressure, and is compacted further. The formed body obtained after the pressing operation, or the compacted coating, can optionally be cleaned with gaseous substances, such as chlorine or thionyl chloride, at temperatures of from 700 to 1000°C and sintered by means of a sintering step at a temperature of from 1000 to 1800°C, preferably from 1100° to 1600°C, in such a manner that the resulting sintered body/the sintered surface is fully dense-sintered or is still partially porous.

c) application of corresponding granulates to formed bodies and surfaces by thermal or other high-energy processes, such as, for example, flame spraying, plasma coating or microwave sintering, in which a solid formed body or a solid coating is obtained and the resulting sintered body/the sintered surface is fully dense-sintered or is still partially porous.

The invention also provides materials or glasses wherein, in the production of the materials or glasses, the above-mentioned granulates, by means of the action of thermal, electric or electromagnetic energy, that is to say, for example, by means of burners, plasma torches or microwave radiation, either are brought into any desired form before or after heating and are then sintered in such a manner that the resulting sintered body/the sintered surface is fully dense-sintered or is still partially porous, or are melted partially or completely, are brought into any desired form before or after heating and solidify in that form or are used for coating other materials, such as, for example, glass or metal, and are then optionally after-treated.

The invention provides glasses wherein sintering to a transparent glass body or to a transparent glass layer takes place within the viscosity range of the glass of from $10^8$ to $10^{12}$ dPas, but preferably from $10^{10}$ to $10^{11}$ dPas.

The invention provides glasses which are at least water-resistant according to hydrolytic class 2, preferably water-resistant according to hydrolytic class 1.

The invention provides glasses wherein the properties of the glasses sintered or melted from corresponding very fine powder particles correspond to the properties of a glass having an identical chemical composition that has been produced via a conventional melting process without using the mentioned granulates. The production of such sintered glasses requires markedly lower sintering temperatures as compared with the melting temperature required to produce a glass having an identical composition within a conventional melting process.

In addition, the invention provides dispersions which are used in the production of sintered materials and have the following properties:

a) solids contents of the above-mentioned granulates of from 10 wt.% to 85 wt.%, preferably from 25 wt.% to 70 wt.%, in a dispersion with a polar or non-polar inorganic or organic liquid, preferably water, ethanol or an aliphatic hydrocarbon.

b) solids contents of the above-mentioned granulates of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic acids, such as, for example, formic acid, citric acid or trichloroacetic acid, using inorganic acids, such as, for example, nitric acid, phosphoric acid or sulfuric acid, using organic bases, such as, for example, triethylamine, pyridine or tetramethylammonium hydroxide, and using inorganic bases, such as, for example, potassium hydroxide, calcium hydroxide or ammonium hydroxide.

c) solids contents of the above-mentioned granulates of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic or inorganic acids or bases and which contains other additives permitting increased granulate contents and an improved dispersibility, such as, for example, polymers or ionic compounds, which contribute towards steric or ionic stabilisation of the dispersion and reduce or prevent the settling of solids portions and/or prevent premature gelling.

d) solids contents of the above-mentioned granulates of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic or inorganic acids or bases and which can contain other additives permitting improved dispersing, gelling, drying and cleaning as well as sintering of the subsequent sintered material, such as, for example, metal alkoxides of the formula Me(OR)$_x$ wherein Me represents a metal, preferably silicon, R represents an alkyl group, and "x" corresponds to the valency of the metal ion. There may also be added to such dispersions other organic binder materials, such as, for example, polymers or resins, which likewise permit an improved product quality of the sintered material, such as, for example, an improvement in the freedom from pores or in the optical transmission, or a simplified process which uses higher degrees of filling and has a lower drying/sintering shrinkage.

e) solids contents of the above-mentioned granulates of from 1 wt.% to 75 wt.%, preferably from 5 wt.% to 50 wt. %, in an aqueous dispersion which has a pH value of pH = from 1 to 6 or pH = from 8 to 12 and is adjusted to the corresponding pH value using organic or inorganic acids or bases and which can optionally contain other additives, such as, for example, metal alkoxides of the formula Me(OR)$_x$, preferably tetraethoxysilane. There may be added to such dispersions pyrogenically produced oxides in an amount by weight of from 1 to 65 wt.%, preferably from 1 to 50 wt.%, such as, for example, silicon dioxide, titanium dioxide, aluminium oxide, zirconium dioxide or mixed oxides of the corresponding metals. The corresponding pyrogenic oxides can be added to the dispersion both in the uncompacted state and after preliminary compaction other than that described in DE 196 01 415 A1 has been carried out.

f) solids contents of the above-mentioned granulates of from 1 wt.% to 75 wt.%, preferably from 5 wt.% to 50 wt.%, in an aqueous dispersion which has a pH value of pH = from 1 to 6 or pH = from 8 to 12 and is adjusted to the corresponding pH value using organic or inorganic acids or bases and which can contain other additives permitting improved dispersing, gelling, drying and cleaning as well as sintering of the subsequent sintered material, such as, for example, metal alkoxides of the formula Me(OR)$_x$, preferably tetraethoxysilane. According to the invention there may be added to such dispersions salts or oxides of a metalloid and/or metal.

The invention relates to the use of the above-mentioned granulates of pyrogenically produced silicon dioxide in the production of sintered materials, especially sintered glasses, wherein the granulates used have the following properties:

a) after a downstream compacting step according to DE 196 01 415 A1, the granulates have a tamped density of from 150 g/l to 800 g/l, preferably from 200 to 500 g/l, a granulate particle size of from 10 to 800 $\mu$m, and a BET surface area of from 10 to 500 m$^2$/g, preferably from 20 to 130 m$^2$/g.

b) the granulates according to DE 196 01 415 A1 oder EP 05005093.9 based on pyrogenically produced silicon dioxide have the following physico-chemical data: mean particle diameter: from 10 to 120 $\mu$m, BET surface area: from 40 to 400 m$^2$/g, pore volume: from 0.5 to 2.5 ml/g, pore distribution: less than 5 % of the total pore volume are pores < 5 nm, only meso- and macro-pores, pH value: from 3.6 to 8.5, tamped density: from 220 to 700 g/l.

The invention provides processes for the production of sintered materials, especially sintered glasses, wherein pyrogenically produced silicon dioxide is compacted and/or granulated in a known manner and converted into a dispersion, the dispersion is gelled and dried, the resulting green body is optionally cleaned and subsequently sintered. Gelling can take place to various forms, such as, for example, formed gel bodies, gel fibres, gelled layers or coatings on a substrate of glass or metal. After being dried and cleaned, the formed gel bodies or gel layers can be sintered in such a manner that a solid formed body or a solid coating is obtained and the resulting sintered body/the sintered surface is fully dense-sintered or is still partially porous.

The invention provides processes for the production of sintered materials, especially sintered glasses, wherein pyrogenically produced silicon dioxide is compacted and/or granulated in a known manner, and then:

a) the granulates, without the aid of a liquid, are introduced into a form or are applied to a surface, a further compacting step is then optionally carried out, in which the formed body or the layer is pressed under a high external mechanical pressure (pressing pressure e.g. from 1 to 120 MPa) in the presence of atmospheric pressure or at reduced pressure, and is compacted further. The formed body obtained after the pressing operation, or the compacted coating, can optionally be cleaned with gaseous substances, such as chlorine or thionyl chloride, at temperatures of from 700 to 1000°C and sintered by means of a sintering step at a temperature of from 1000 to 1800°C, preferably from 1100° to 1600°C, in such a manner that the resulting sintered body/the sintered surface is fully dense-sintered or is still partially porous.

b) granulates are applied to formed bodies and surfaces by thermal or other high-energy processes, such as, for example, flame spraying, plasma coating or microwave sintering, during which a solid formed body or a solid coating is obtained, and the resulting sintered body/the sintered surface is fully dense-sintered or is still partially porous.

c) the mentioned granulates are brought into any desired form by means of the action of thermal, electric or electromagnetic energy, that is to say, for example, by means of burners, plasma torches or microwave radiation, either before or after heating, and are then sintered in such a manner that the resulting sintered body/the sintered surface is fully dense-sintered or is still partially porous, or the granulates are melted partially or completely, are brought into any desired form before or after heating and are allowed to solidify in that form or are used to coat other materials, such as, for example, glass or metal, and are then optionally after-treated.

The invention relates to the use of sintered materials, especially sintered glasses or glasses, in the production of formed glass bodies, such as, for example, optical fibre preformed bodies (so-called "overcladding tubes" or "core rods"), optical lenses, diffraction gratings, glass crucibles (so-called "crucibles"), electrical insulators, thermal insulators, magnetic insulators, prisms, containers or apparatuses for the chemicals or pharmaceuticals industry, ingots, formed bodies for the electronics industry, glass bars as a raw material for further processing, formed bodies having high requirements as regards accuracy of shape after the process.

The invention relates to the use of sintered materials, especially sintered glasses or glasses, in the coating of other materials, such as metal, plastics or glass, with layers of materials.

The invention relates to the use of sintered materials, especially sintered glasses or glasses, in the production of fibrous materials or fibres.

The invention relates to the use of granulates in the production of glasses, especially sintered glasses, ceramics, composite materials, in which the granulates act as a reinforcing filler, as reinforcing fillers in metals, glasses, polymers, elastomers, lacquers or liquids.

The invention relates to the use of dispersions in the production of glasses, especially sintered glasses, and in the polishing of semiconductor materials or electric circuits.

In a preferred embodiment of the invention, a pyrogenically produced silicon dioxide which has been granulated or compacted in a known manner according to DE 196 01 415 A1 or EP 05005093.9 can be used in the production of sintered materials.

The silicon dioxide so compacted or granulated can be a pyrogenically produced oxide having a BET surface area of from 10 to 500 $m^2/g$, a tamped density of from 150 to 800 g/l and a granulate particle size of from 10 to 800 $\mu$m.

According to the invention, mixtures of compacted and uncompacted silicon dioxide can also be used.

There may be added to the compacted pyrogenic silicon dioxide in a dispersion salts or oxides of a metalloid and/or metal.

Within the dispersion, mixtures of compacted and uncompacted pyrogenically produced silicon dioxides can also be produced.

Hereinbelow, the expressions "pyrogenically produced silica", "pyrogenically produced silicon dioxide", "pyrogenic silica" and "pyrogenic silicon dioxide" are to be understood as meaning very finely divided, nano-scale powders produced by converting gaseous silicon tetrachloride in a high-temperature flame, wherein the flame is fed with hydrogen and oxygen and water vapour can optionally be supplied thereto.

Hereinbelow, the term "granulate" is to be understood as meaning pyrogenically produced silicon dioxide powders highly compacted by means of the compaction process described in DE 196 01 415 A1 or EP 05005093.9 or analogously to that process.

Hereinbelow, the term "dispersion" is to be understood as meaning the homogeneous, that is to say extremely uniform, distribution of uncompacted or compacted, that is to say "granulated", pyrogenic silicon dioxide in a liquid such as water, ethanol or an organic solvent.

The expressions "sintered material" and "sintered glasses" are to be understood as meaning materials and glasses produced from very finely divided powders by means of a process of powder technology and a subsequent sintering step.

The expression "sintering process" is to be understood as meaning processes in which very finely divided powders change after the application of warmth or heat into solid formed bodies or layers which have pores only in part or even no pores at all.

The expression "gel bodies" is to be understood as meaning formed bodies which occur after gelling, that is to say after solidification in the wet or moist state, and which have a skeleton of interconnected particles which is filled with liquid.

The expression "green bodies" is to be understood as meaning dried gel bodies in which the liquid has been removed from the particle skeleton and which have a high degree of porosity.

Advantages of the sintered materials, especially sintered glasses, of the invention are the improved optical transparency of glasses, improved optical homogeneity, improved chemical or mechanical resistance of layers on substrate materials, and the improved ability of formed bodies or fibres to withstand chemical or mechanical loads as compared with materials or glasses produced by means of existing "sol-gel processes", "colloidal sol-gel processes" or by means of a conventional melting process.

The powder granulate of the invention has the following advantages:

A higher degree of filling of the dispersions can be produced with the highly compacted powders. The higher degree of filling of the dispersion gives rise to better product properties in the materials produced therefrom, such as, for example, better transparency, as a result of a lower number of seed inclusions and fewer cracks. At the same time, the use of highly compacted powders also gives rise to advantages in terms of process technology: for example, dispersions are easier to prepare with the aid of the highly compacted powder. The advantages in terms of process technology achieved with the use of more highly filled dispersions are, moreover, in the case of sintered materials, that green body shrinkage or sintering shrinkage is reduced. The use of such powders brings other advantages in terms of process technology. For example, by influencing the extent to which the powders used are finely divided or the porosity of the green body, it is possible to lower the sintering temperature in a manner which is not possible using other powders or other production processes without a loss in the quality of the subsequent sintered materials.

In addition, the use, according to the invention, of highly compacted powders leads to better processability within the powder-technological production process owing to an improved capillary and pore structure of the gel body. By using such highly compacted powders, therefore, drying of the gel body can be simplified and the quality of the subsequent product can be improved.

The described sintered materials, especially sintered glasses or glasses, can be used commercially in the production of formed glass bodies, such as, for example, optical fibre preformed bodies (so-called "overcladding tubes" or "core rods"), optical lenses, diffraction gratings, glass crucibles (so-called "crucibles"), electrical insulators, thermal insulators, magnetic insulators, prisms, containers or apparatuses for the chemicals or pharmaceuticals industry, ingots, formed bodies for the electronics industry, glass bars as a raw material for subsequent further processing, formed bodies having high requirements as regards accuracy of shape after the process.

In addition, such sintered materials can be used commercially in the coating of other materials, such as metal, plastics or glass, with layers of sintered glass or glass. Sintered materials, such as sintered glasses or glasses, can also be used in the production of fibrous materials or fibres.

The described granulates can be used in the production of glasses, especially sintered glasses, ceramics or composite materials, in which the granulates act as a reinforcing filler, and serve as reinforcing fillers in metals, glasses, polymers, elastomers, lacquers or liquids.

The described dispersions can be used in the production of glasses, especially sintered glasses, and in the polishing of semiconductor materials or electric circuits.

**Examples**

The BET surface area is determined in accordance with DIN 66131.

The dibutyl phthalate absorption is measured with a RHEOCORD 90 instrument made by Haake, Karlsruhe. For this purpose, 16 g of the silicon dioxide powder, weighed out to an accuracy of 0.001 g, is placed in a mixing chamber, this is sealed with a lid and dibutyl phthalate is added at a pre-set rate of addition of 0.0667 ml/s via a hole in the lid. The mixer is operated with a motor speed of 125 revs per minute. After reaching maximum torque, the mixer and DBP addition are automatically switched off. The DBP absorption is calculated from the amount of DBP consumed and the amount of particles weighed out in accordance with:

$$\text{DBP index (g/100 g)} = (\text{DBP consumed in g} \ / \ \text{initial weight of particles in g}) \times 100.$$

A programmable rheometer for testing complex flow behaviour, equipped with a standard rotation spindle, was available for determining the viscosity.

Rate of shear: 5 to 100 rpm

Temperature of measurement: room temperature (23°C)

Concentration of dispersion: 30 wt.%

Procedure: 500 ml of dispersion are placed in a 600 ml glass beaker and tested at room temperature (statistical recording of temperature via a measuring sensor) under different rates of shear.

Determination of the compacted bulk density is based on DIN ISO 787/XI K 5101/18 (not sieved).

Determination of the pH is based on DIN ISO 787/IX, ASTM D 1280, JIS K 5101/24.

The image analyses were performed using a TEM instrument H 7500 made by Hitachi and a CCD camera MegaView II, made by SIS. Image magnification for evaluation purposes was 30000 : 1 at a pixel density of 3.2 nm. The number of particles evaluated was greater than 1000. Preparation was in accordance with ASTM 3849-89. The lower threshold limit for detection was 50 pixels.

Determining the maximum degree of filling in an aqueous dispersion: 200 g of fully deionised water were initially placed in a 1 l vessel (diameter about 11 cm). A dissolver from VMA-Getzmann, model Dispermat® CA-40-C with a dissolver disc, diameter about 65 mm, was used as the dispersing unit.

At the start, the dissolver is operated at about 650 rpm. The powder is added in portions of about 5 g. After each addition, there is a waiting period until the powder has been completely incorporated into the suspension. Then the next portion is added. As soon as incorporation of an added amount of powder takes longer than about 10 s, the speed of the dissolver disc is increased to 1100 rpm. Then further stepwise addition is performed. As soon as incorporation of an added amount of powder takes longer than about 10 s, the speed of the dissolver disc is increased to 1700 rpm.

The maximum degree of filling is achieved when either no further powder is taken up by the dispersion, despite increased stirring power, i.e. the powder remains in dry form on the surface of the dispersion, or the dispersion becomes solid or the dispersion starts to form lumps.

The amount of powder added can be determined by difference weighing (preferably difference weighing of the powder stock). The maximum degree of filling is calculated as:

```
Maximum degree of filling = amount of powder added
[g]/(amount of powder added [g] + amount of water initially
introduced [g]) x 100%
```

**Example 1 (comparison example):**

500 kg/h $SiCl_4$ are vaporised at about 90°C and transferred to the central tube of a burner of known construction. 145 $Nm^3/h$ of hydrogen and 207 $Nm^3/h$ of air with an oxygen content of 35 vol.% are also introduced into this tube. This gas mixture is ignited and burnt in the flame tube of the water-cooled burner. The mean normalised rate of flow of gas in the flame tube at the level of the mouth of the burner is 0.7 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

**Examples 2 to 4 (comparison examples)** are performed in the same way as example 1. The parameters which are altered each time are given in Table 1.

**Example 5 (working example):**

400 kg/h $SiCl_4$ are vaporised at about 90°C and transferred to the central tube of a burner of known construction. 195 $Nm^3/h$ of hydrogen and 303 $Nm^3/h$ of air with an oxygen content of 30 vol.% are also introduced into this tube. This gas mixture is ignited and burnt in the flame tube of the water-cooled burner. The mean normalised rate of flow of gas in the flame tube at the level of the mouth of the burner is 10 m/s. After cooling the reaction gases, the pyrogenic silicon dioxide powder is separated from the hydrochloric acid-containing gases using a filter and/or a cyclone. The pyrogenic silicon dioxide powder is treated with water vapour and air in a deacidification unit.

**Examples 6 to 8** are performed in the same way as described in example 1. The parameters which are altered each time are given in Table 1.

The analytical data for powders 1 to 8 are given in Table 2.

The powders in examples 5 to 8 exhibit much lower values for mean aggregate area, mean aggregate circumference and maximum and minimum aggregate diameter and thus much less structure than the powders in comparison examples 1 to 4.

The powders have a much higher maximum degree of filling and a much lower viscosity in an aqueous dispersion.

**Table 1: Experimental conditions and the flame parameters calculated therefrom**

| | | Comparison examples | | | | Examples | | | |
|---|---|---|---|---|---|---|---|---|---|
| Example | | 1 | 2 | 3 | 4 | 5 | 6 | 7 | 8 |
| $SiCl_4$ | kg/h | 500 | 500 | 400 | 400 | 400 | 400 | 350 | 400 |
| $H_2$ core | $Nm^3/h$ | 145 | 210 | 255 | 190 | 195 | 195 | 145 | 195 |
| Air (primary air) | $Nm^3/h$ | 207 | 300 | 250 | 320 | 303 | 300 | 220 | 300 |
| $O_2$ content of air | Vol.% | 35 | 35 | 35 | 30 | 35 | 29.5 | 35 | 33 |

(continued)

|  |  | Comparison examples | | | | Examples | | | |
|---|---|---|---|---|---|---|---|---|---|
| Example | | 1 | 2 | 3 | 4 | 5 | 6 | 7 | 8 |
| Secondary air [b] | Nm³/h | - | 50 | 250 | 50 | 730 | 600 | 500 | 100 |
| Burner diameter | mm | 55 | 65 | 65 | 65 | 64 | 64 | 64 | 64 |
| Flame tube diameter | mm | 450 | 450 | 450 | 450 | 208 | 208 | 160 | 160 |
| lambda [c] | | 1.0 | 1.0 | 0.69 | 1.0 | 1.1 | 1.0 | 1.1 | 1.0 |
| gamma | | 1.1 | 1.6 | 2.4 | 1.8 | 1.8 | 1.8 | 1.6 | 1.8 |
| $V_B$ [d] | m/s | 49 | 48 | 47 | 47 | 47 | 47 | 36 | 47 |
| $V_F$ [e] | m/s | 0.7 | 1 | 1.28 | 1 | 10 | 9 | 12 | 8 |
| Throughput [a] | kg/m³ | 0.42 | 0.31 | 0.25 | 0.25 | 0.26 | 0.26 | 0.3 | 0.26 |

(a) kg $SiO_2$/m³ of primary air + hydrogen + $SiCl_4$ (feedstocks);
(b) air with 21 vol.% $O_2$;
(c) with reference to primary air;
(d) $V_B$ = mean rate of discharge at the mouth of the burner (normalised);
(e) $V_F$ = mean rate of flow in the reaction chamber at the level of the mouth of the burner (normalised).

### Table 2: Analytical data for silicon dioxide powders

|  |  | Comparison examples | | | | Examples | | | |
|---|---|---|---|---|---|---|---|---|---|
| Example | | 1 | 2 | 3 | 4 | 5 | 6 | 7 | 8 |
| BET | m²/g | 44 | 55 | 49 | 60 | 45 | 44 | 60 | 55 |
| DBP | g/100g | 106 | 121 | 142 | 90 | 67 | 72 | 61 | 65 |
| Mean aggregate area | nm² | 23217 | 22039 | 24896 | 22317 | 17063 | 15972 | 16816 | 18112 |
| Mean aggregate circumference | nm | 1032 | 1132 | 1201 | 1156 | 742 | 658 | 704 | 699 |
| Aggregates < 1300 nm | % | 61 | 64 | 52 | 64 | 80 | 84 | 89 | 82 |
| Max. aggregate diameter | nm | 292 | (b) | (b) | (b) | 191 | 183 | (b) | (b) |
| Min. aggregate diameter | nm | 207 | (b) | (b) | (b) | 123 | 117 | (b) | (b) |
| Compacted bulk density | g/l | 112 | 90 | 89 | 117 | 117 | 105 | 110 | 123 |
| Viscosity [a] | mPas | 420 | 600 | 1200 | 380 | 20 | 33 | 48 | 18 |
| Maximum degree of filling | wt.% | 34 | 25 | 26 | 33 | 72 | 81 | 79 | 81 |
| pH | | 4.5 | 4.8 | 4.7 | 4.6 | 4.7 | 4.8 | 4.5 | 4.8 |

(a) 30 wt.% dispersion at 5 rpm;
(b) not determined

### Example 9 (Comparison Example)

500 kg/h $SiCl_4$ having a composition in accordance with Table 3 are evaporated at approx. 90°C and transferred into the central tube of a burner of known design. 190 Nm³/h hydrogen as well as 326 Nm³/h air having a 35 vol.% oxygen content are introduced additionally into this tube. This gas mixture is ignited and burns in the flame tube of the water-cooled burner. 15 Nm³/h hydrogen are introduced additionally into a jacket nozzle surrounding the central nozzle, in order to prevent baking-on. 250 Nm³/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adherent hydrochloric acid. The metal contents are reproduced in Table 5.

**Example 10 (Embodiment Example)**

500 kg/h $SiCl_4$ having a composition in accordance with Table 4 are evaporated at approx. 90°C and transferred into the central tube of a burner of known design. 190 $Nm^3$/h hydrogen as well as 326 $Nm^3$/h air having a 35 vol.% oxygen content are introduced additionally into this tube. This gas mixture is ignited and burns in the flame tube of the water-cooled burner. 15 $Nm^3$/h hydrogen are introduced additionally into a jacket nozzle surrounding the central nozzle, in order to prevent baking-on. 250 $Nm^3$/h air of normal composition are moreover introduced additionally into the flame tube. After cooling of the reaction gases the pyrogenic silicon dioxide powder is separated by means of a filter and/or a cyclone from the hydrochloric acid-containing gases. The pyrogenic silicon dioxide powder is treated with water vapour and air in a deacidifying unit in order to remove adhering hydrochloric acid.

The metal contents are reproduced in Table 5.

Table 3: Composition of $SiCl_4$, Example 9

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| 18 | 140 | 86 | <0.1 | 2.7 | 0.4 | 280 | 14 | - | 1.4 | - | 200 | 0.6 | 250 | | |

Table 4: Compoition of SiCl$_4$, Example 10

| Al | B | Ca | Co | Cr | Cu | Fe | K | Mg | Mn | Mo | Na | Ni | Ti | Zn | Zr |
|----|----|----|----|----|----|----|----|----|----|----|----|----|----|----|----|
| ppb | ppb | ppb | ppb | ppb | ppb | ppb | ppb | ppb | ppb | ppb | ppb | ppb | ppb | ppb | ppb |
| <1 | <30 | <5 | <0.1 | <0.2 | <0.1 | <0.5 | <1 | <1 | <0.1 | <0.2 | <1 | <0.2 | <0.5 | <1 | <0.5 |

Table 5: Metal contents of silicon dioxides (ppb)

| [ppb] | Example 10a | | Example 10b | | Example 9 |
|---|---|---|---|---|---|
| | | | | | Comparison Example Aerosil® OX50 |
| Li | 0.8 | < = 10 | 0.5 | < = 1 | < 100 |
| Na | 68 | < = 80 | 49 | < = 50 | < 1000 |
| K | 44 | < = 80 | 46 | < = 50 | 10 |
| Mg | 10 | < = 20 | 10 | < = 10 | < 200 |
| Ca | 165 | < = 300 | 89 | < = 90 | 190 |
| Fe | 147 | < = 800 | 192 | < = 200 | < 100 |
| Cu | 3 | < = 10 | < 3 | < = 3 | < 100 |
| Ni | 113 | < = 800 | 79 | < = 80 | < 200 |
| Cr | 47 | < = 250 | 37 | < = 40 | < 100 |
| Mn | 3 | < = 20 | 2 | < = 5 | < 100 |
| Ti | 132 | < = 200 | 103 | < = 150 | 5600 |
| A1 | 521 | < = 600 | 350 | < = 350 | 780 |
| Zr | 3 | < = 80 | < 3 | < = 3 | < 100 |
| V | 0.5 | < = 5 | < 0.5 | < = 1 | < 500 |
| | | | | | |
| | Σ 1257 ppb = 1.26 ppm | Σ 3255 ppb = 3.2 ppm | Σ 964 ppb = 0.96 ppm | Σ 1033 ppb = 1.03 ppm | Σ 9080 ppb = 9.08 ppm |

Measuring method

The pyrogenically prepared silicon dioxides which are obtained are analysed as to their metal content. The samples are dissolved in an acid solution which comprises predominantly HF.

The $SiO_2$ reacts with the HF, forming $SiF_4$ + $H_2O$. The $SiF_4$ evaporates, leaving behind completely in the acid the metals which are to be determined. The individual samples are diluted with distilled water and analysed against an internal standard by inductively coupled plasma-atomic emission spectroscopy (ICP-AES) in a Perkin Elmer Optima 3000 DV. The imprecision of the values is the result of sample variations, spectral interferences and the limitations of the measuring method. Larger elements have a relative imprecision of $\pm$ 5%, while the smaller elements have a relative imprecision of $\pm$ 15%.

The pyrogenically prepared silicon dioxides used are silicon dioxides having the physicochemical properties given below.

To prepare the silicon dioxides, a liquid silicon compound is sprayed into an oxyhydrogen flame consisting of hydrogen and air. In most cases silicon tetrachloride is used. This substance is hydrolysed to silicon dioxide and hydrochloric acid by the action of the water formed during the hydrogen-oxygen reaction. After leaving the flame, the silicon dioxide enters a so-called coagulation zone, wherein the primary Aerosil particles and primary Aerosil aggregates agglomerate. The product, which exists at this stage as a kind of aerosol, is separated from the accompanying gaseous substances in cyclones and then aftertreated with moist heated air.

By this process the residual hydrochloric acid content can be lowered to 0.025%. As the silicon dioxide obtained at the end of this process has a bulk density of only about

15 g/l, there is a subsequent vacuum compaction, whereby tamped densities of about 50 g/l and more can be established.

The particle sizes of the silicon dioxides can be varied by means of the reaction conditions such as, for example, flame temperature, proportions of hydrogen and oxygen, quantity of silicon tetrachloride, residence time in the flame or length of the coagulation path.

The BET surface area is determined using nitrogen in accordance with DIN 66 131.

The pore volume is calculated from the sum of the micro-, meso- and macropore volumes. The micro- and mesopores are determined by recording an $N_2$ isotherm and evaluation thereof by the methods of BET, de Boer and Barrett, Joyner and Halenda. The macropores D > 30 nm are determined by the Hg porosimetry method. For the determination of the macropores, the sample is dried for 15 h at 100 °C in the drying oven and degassed at room temperature in a vacuum.

For the determination of the micro- and mesopores, the sample is dried for 15 h at 100 °C in the drying oven and degassed for 1 h at 200 °C in a vacuum.

The silanol group concentration is determined by the lithium alanate method. Here the SiOH- groups are reacted with LiAlH4 and the quantity of hydrogen formed during this reaction is determined from the pressure.

Principle of measurement

The granular material is weighed into a four-necked flask. The flask is evacuated and an oil bath is heated to 150 °C The temperature in the flask (controlled by an internal thermometer) rises with the temperature of the oil bath to about 130 °C. The pressure during the preliminary treatment is recorded using a pressure measuring device $PI_2$ (TM 210, from Leybold, measuring range $10^3$ to $10^{-3}$ mbar). The desorption of the water can be monitored from the pressure measurement. At the end of the preliminary treatment (30 min at the end temperature) a pressure of less than $10^{-2}$ mbar must have been achieved.

After completion of the preliminary treatment, the evacuated flask is separated from the vacuum unit by closing the stop valve and is brought to normal temperature. The actual measurement is based on a measured quantity of $LiAlH_4$ solution being introduced into the flask through the dropping funnel and the rise in pressure being measured from the hydrogen formed. If the volume of the flask is known, the quantity of $H_2$ can be calculated from the ideal gas law. The pressure is recorded using a digital measuring device ($PI_1$) (MKS Instruments PR-2000), having a measuring range of between 0 and 1 bar.

The $LiAlH_4$ solution used (2% $LiALH_4$ in diethylene glycol dimethyl ether) is degassed prior to the experiment being carried out, in order to remove readily volatile constituents, which distort the pressure measurement. For this purpose the pressure above the solution in the dropping funnel is lowered by a second vacuum pump to the vapour pressure (3.7 mbar at 22 °C), so that the liquid boils. A blank measurement without a sample is taken to test whether the solution is sufficiently degassed. In the determination of the hydrogen pressure, a correction is made using the vapour pressure of the solvent.

Interpretation

The apparatus is calibrated by first of all determining the volume of the dropping funnel provided with a ground-glass stopper, gauging the capacity in litres. The volume of the reaction flask inclusive of all connections as far as the stop valve is obtained by the following experiment:

The dropping funnel, filled with air at atmospheric pressure, is attached to the evacuated flask. A pressure compensation between the two volumes is then brought about by opening the tap of the dropping funnel. The pressure established is indicated by the digital measuring device. The volume of the reaction vessel is obtained from the mass balance. A volume $V_R$ equal to 243.8 ml is obtained with the present arrangement.

The number of moles of hydrogen formed is obtained from the equations:

$$n = \frac{p \cdot V(corr.)}{RT}$$

$$V_{corr.} = V_R - V_{solids} - V_{solution}$$

p is the increase in pressure in the reaction flask. This value is corrected by an amount corresponding to the vapour pressure of the solvent (3.7 mbar at 22 °C). At room temperatures greatly differing from 22 °C the vapour pressure is taken from the vapour pressure table. It is useful so to select the weighed sample, that a value for p of between 200 and 800 mbar is obtained. In this case minor changes in the vapour pressure owing to temperature variations have hardly any effect on the result.

The volume of the reaction vessel is corrected by deducting the volume of solid matter and the volume of the solution introduced. The former is given from the weighed portion and the density and the latter is read from the dropping funnel.

The density of silanol groups is finally obtained from the equation:

$$d = \frac{n \cdot N_L}{F}$$

$N_L$: Lohschmidt number

F: Surface of the weighed solid matter

The samples are treated as follows:

1 h heating at 120oC and 0.2 mbar; cooling to 60 °C; addition of $LiAlH_4$; after 10 mins, reading the pressure difference which has arisen.

The particle size distribution is determined by means of the laser optical particle size analyser Cilas Granulametre 715.

The tapped volume is determined in accordance with ASTM D 4164-88.

Equipment :  Tapping volumeter STA V 2003 from Engelsmann, in accordance with DIN 53194, section 5.2. b-f
Measuring cylinder 250 ml, graduation marks every 2 ml
Balance with limit of error of max. $\pm$ 0.1 g

Procedure

The counter of the tapping volumometer is set to 1000 strokes.
The measuring cylinder is tared.
The granular material is placed in the measuring cylinder up to the 250 ml mark.
The weight of the sample is recorded ($\pm$ 0.1 g).
The measuring cylinder is placed in the volumeter and the apparatus is switched on.
End of tapping: the apparatus automatically switches off after 1000 strokes
The tapped bulk volumes are read to an accuracy of 1 ml.

Calculation

E: weighed portion of granular material in g
V: volume read in ml
W: water content in wt.% (determined in accordance with Specification P001)

$$\text{Tapped density} = \frac{E \times (100 - W)}{V \times 100}$$

The pH value is determined in 4% aqueous dispersion, in the case of hydrophobic catalyst supports in water: ethanol 1:1.

<u>Preparation of the granules according to the invention</u>

The pyrogenically prepared silicon dioxide is dispersed in completely demineralised water. A dispersing aggregate which operates according to the rotor/stator principle is used in the process. The suspensions formed are spray dried. The finished product is precipitated by a filter or cyclone.

The sprayed granules are heated in a muffle furnace.

**Example 11**

First of all, 180 ml of distilled water are placed in a vessel and, before the introduction of the compacted powder begins, are adjusted to a pH value of 11 using a 30 wt.% KOH solution. 120 g of the highly compacted powder granulate are then gradually introduced into the water by means of a dissolver having a dissolver disk; the speed of rotation of the dissolver is to be approximately 1000 rpm. When the highly compacted powder has been completely incorporated into the suspension, the suspension is pre-dispersed by means of the dissolver for approximately 30 minutes.

After that time, the pre-dispersed suspension is dispersed for approximately 120 minutes by means of an Ultra-Turrax rotor-stator dispersing unit at 10,000 rpm and, during the dispersion, is cooled. The dispersing step yields a dispersion which, after standing for 24 hours, has a viscosity in the range of from 200 to 250 mPas/s at 50 rpm (measured using a Brookfield viscometer with spindle 2).

**Example 12**

First of all, 180 ml of distilled water are placed in a vessel and, before the introduction of the compacted powder begins, are adjusted to a pH value of 11 using a 30 wt.% KOH solution. The uncompacted powder is then gradually introduced into the water by means of a dissolver having a dissolver disk; the speed of rotation of the dissolver is to be approximately 1000 rpm. However, only 96 g of the uncompacted powder can be stirred into the suspension without the dispersion becoming too viscous, as compared with 120 g in Example 11. When the powder has been completely incorporated into the suspension, the suspension is pre-dispersed by means of the dissolver for approximately 30 minutes.

After that time, the pre-dispersed suspension is dispersed for approximately 120 minutes by means of an Ultra-Turrax rotor-stator dispersing unit at 10,000 rpm and, during the dispersion, is cooled. The dispersing step yields a dispersion which, after standing for 24 hours, has a viscosity in the range of from 330 to 460 mPas/s at 50 rpm (measured using a Brookfield viscometer with spindle 2). As compared with Example 1, where the solids content of the dispersion is 40 wt.% of granulate, only approximately 35 wt.% of the uncompacted powder can be converted into a dispersion. Moreover, the viscosity of the dispersion is markedly higher in Example 12 than in Example 11, which renders the colloidal sol-gel process more difficult.

**Example 13**

First of all, 180 ml of distilled water are placed in a vessel and, before the introduction of the compacted powder begins, are adjusted to a pH value of 11 using a 30 wt.% KOH solution. 220 g of the highly compacted powder granulate are then gradually introduced into the water by means of a dissolver having a dissolver disk; the speed of rotation of the dissolver is to be approximately 1000 rpm. When the highly compacted powder has been completely incorporated into the suspension, the suspension is pre-dispersed by means of the dissolver for approximately 30 minutes.

After that time, the pre-dispersed suspension is dispersed for approximately 120 minutes by means of an Ultra-Turrax rotor-stator dispersing unit at 10,000 rpm and, during the dispersion, is cooled. The resulting dispersion has a solids content of approximately 55 wt.% of the highly compacted granulate.

**Example 14**

First of all, 180 ml of distilled water are placed in a vessel and, before the introduction of the compacted powder begins, are adjusted to a pH value of 11 using a 30 wt.% KOH solution. The uncompacted powder is then gradually introduced into the water by means of a dissolver having a dissolver disk; the speed of rotation of the dissolver is to be approximately 1000 rpm. However, only 180 g of the uncompacted powder can be stirred into the suspension without the dispersion becoming too viscous, as compared with 220 g in Example 13. When the powder has been completely incorporated into the suspension, the suspension is pre-dispersed by means of the dissolver for approximately 30 minutes.

After that time, the pre-dispersed suspension is dispersed for approximately 120 minutes by means of an Ultra-Turrax rotor-stator dispersing unit at 10,000 rpm and, during the dispersion, is cooled. As compared with Example 13, in which the content, by weight, of granulate in the dispersion is 55 wt.%, only approximately 50 wt.% of the uncompacted powder can be converted into a dispersion.

### Example 15

17.2 g of the compacted powder are stirred with 27 ml of distilled water and 2.57 ml of tetramethylammonium hydroxide to form a homogeneous dispersion as described in Examples 1 to 4.

When dispersion is complete, 1 ml of ethyl acetate is added and the dispersion is immediately poured into a form.

After 12 minutes, the dispersion has gelled and the resulting gel body is removed from the form after one hour and dried at room temperature for 6 days.

Drying yields a microporous green body.

The green body is sintered *in vacuo* for four hours at 1400°C by means of zone sintering. A sintered glass body without visible seeds or pores is obtained.

### Example 16

11.2 g of the compacted powder are processed with 27 ml of distilled water and 2.57 ml of tetramethylammonium hydroxide to form a homogeneous dispersion as described in Examples 1 to 4. When dispersion is complete, 1 ml of ethyl acetate is added and the dispersion is immediately poured into a form.

After 20 minutes, the dispersion has gelled. The resulting gel body is removed from the form after one hour and dried at room temperature for 7 days.

Drying yields a microporous green body.

The green body is sintered *in vacuo* for four hours at 1400°C by means of zone sintering. A sintered glass body without visible seeds or pores is obtained.

### Example 17

18 g of the compacted powder are dried for 24 hours at 105°C in a drying cabinet. The powder is then dry pressed, uniaxially, to a formed body having a diameter of 10 mm.

Pressing is carried out in a steel form at a pressing pressure of 51.2 MPa and with a pressing time of 90 seconds.

The formed body is sintered *in vacuo* at 1500°C for 5 hours in a zone-sintering furnace. A sintered glass body without visible seeds or pores is obtained.

### Claims

1. A sintered material, especially a sintered glass, produced by means of a forming or compacting process, optionally a subsequent cleaning step and optionally a subsequent sintering process, wherein

   a) there is used for the production thereof pyrogenically produced silicon dioxide which has been compacted to granulates by means of a downstream compacting step according to DE 196 01 415 A1 and has a tamped density of from 150 g/l to 800 g/l, preferably from 200 to 500 g/l, a granulate particle size of from 10 to 800 $\mu$m and a BET surface area of from 10 to 500 $m^2$/g, preferably from 20 to 130 $m^2$/g,
   b) there are used for the production thereof granulates according to DE 196 01 415 A1 based on pyrogenically produced silicon dioxide having the following physicochemical data:

   mean particle diameter: from 10 to 120 $\mu$m, BET surface area: from 40 to 400 $m^2$/g, pore volume: from 0.5 to 2.5 ml/g, pore distribution: less than 5 % of the total pore volume are pores < 5 nm, only meso-and macro-pores, pH value: from 3.6 to 8.5, tamped density: from 220 to 700 g/l.

2. The sintered material as claimed in claim 1), wherein the granulates mentioned in claim 1) are processed to the sintered material by means of a process of the following type:

   a) preparation of a dispersion of granulates having a solids content of from 10 wt.% to 85 wt.%, preferably from 25 wt.% to 70 wt.%, and a polar or non-polar inorganic or organic liquid, preferably water, ethanol or an aliphatic hydrocarbon; then transfer of the dispersion into a form or coating of surfaces with the dispersion, initiation of gelling of the dispersion and drying of the gel body or of the gel-body-like coating; the green body obtained after the drying operation, or the green-body-like coating, can optionally be cleaned with gaseous substances, such as chlorine or thionyl chloride, at temperatures of from 700 to 1000°C and then optionally be sintered by means of a sintering step at a temperature of from 1000 to 1800°C, preferably from 1100° to 1600°C, in such a manner that the resulting sintered body/the sintered surface is fully dense-sintered or is still partially porous,

b) introduction of the granulates as claimed in claim 1), without the aid of a liquid, into a form or application of the granulates to a surface, then optionally a further compacting step in which the formed body or the layer is pressed under a high external mechanical pressure (pressing pressure e.g. from 1 to 120 MPa) in the presence of atmospheric pressure or at reduced pressure, and is compacted further; the formed body obtained after the pressing operation, or the compacted coating, can optionally be cleaned with gaseous substances, such as chlorine or thionyl chloride, at temperatures of from 700 to 1000°C and sintered by means of a sintering step at a temperature of from 1000 to 1800°C, preferably from 1100° to 1600°C, in such a manner that the resulting sintered body/the sintered surface is fully dense-sintered.or is still partially porous,

c) application of granulates as claimed in claim 1) to formed bodies and surfaces by thermal or other high-energy processes, such as, for example, flame spraying, plasma coating or microwave sintering, in which a solid formed body or a solid coating is obtained and the resulting sintered body/the sintered surface is fully dense-sintered or is still partially porous.

3. A sintered material according to claim 1, whereby in the production of the material or glass, the granulates by means of the action of thermal, electric or electromagnetic energy, that is to say, for example, by means of burners, plasma torches or microwave radiation,

a) are brought into any desired form before or after heating and are then sintered in such a manner that the resulting sintered body/the sintered surface is fully dense-sintered or is still partially porous,

b) are melted partially or completely, are brought into any desired form before or after heating and solidify in that form or are used for coating other materials, such as, for example, glass or metal, and are then optionally after-treated.

4. The sintered material according to claims 1 to 3, wherein sintering to a transparent glass body or to a transparent glass layer takes place within the viscosity range of the glass of from 108 to 1012 dPas, but preferably from 1010 to 1011 dPas.

5. The sintered material according to claims 1 to 3, wherein the glass is at least water-resistant according to hydrolytic class 2, preferably water-resistant according to hydrolytic class 1.

6. The sintered material according to claims 1 to 3, wherein the properties of the glass sintered or melted from corresponding very fine powder particles correspond to the properties of a glass having an identical chemical composition that has been produced via a conventional melting process without using the granulates as claimed in claim 1). The production of such sintered glasses requires markedly lower sintering temperatures as compared with the melting temperature required to produce a glass having an identical composition within a conventional melting process.

7. The sintered material according to claim 2, whereby the dispersion which is used in the production of a sintered material as claimed in claim 1) and has the following properties:

a) solids contents of granulates as claimed in claim 1) of from 10 wt.% to 85 wt.%, preferably from 25 wt.% to 70 wt.%, in a dispersion with a polar or non-polar inorganic or organic liquid, preferably water, ethanol or an aliphatic hydrocarbon.

b) solids contents of granulates as claimed in claim 1) of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic acids, such as, for example, formic acid, citric acid or trichloroacetic acid, using inorganic acids, such as, for example, nitric acid, phosphoric acid or sulfuric acid, using organic bases, such as, for example, triethylamine, pyridine or tetramethylammonium hydroxide, and using inorganic bases, such as, for example, potassium hydroxide, calcium hydroxide or ammonium hydroxide.

c) solids contents of granulates as claimed in claim 1) of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic or inorganic acids or bases and which contains other additives permitting increased granulate contents and an improved dispersibility, such as, for example, polymers or ionic compounds, which contribute towards steric or ionic stabilisation of the dispersion and reduce or prevent the settling of solids portions and/or prevent premature gelling.

d) solids contents of granulates as claimed in claim 1) of from 10 wt.% to 85 wt.%, preferably from 25 wt.% to 70 wt.%, in an aqueous dispersion which has a pH value of pH = from 1 to 6 or pH = from 8 to 12 and is adjusted to the corresponding pH value using organic or inorganic acids or bases and which can contain other additives permitting improved dispersing, gelling, drying and cleaning as well as sintering of the subsequent sintered material, such as, for example, metal alkoxides of the formula Me(OR)$_x$ wherein Me represents a metal, preferably silicon, R represents an alkyl group, and "x" corresponds to the valency of the metal ion. There may also be added to such dispersions other organic binder materials, such as, for example, polymers or resins, which likewise permit an improved product quality of the sintered material, such as, for example, an improvement in the freedom from pores or in the optical transmission, or a simplified process which uses higher degrees of filling and has a lower drying/sintering shrinkage.

e) solids contents of granulates as claimed in claim 1) of from 1 wt.% to 75 wt.%, preferably from 5 wt.% to 50 wt.%, in an aqueous dispersion which has a pH value of pH = from 1 to 6 or pH = from 8 to 12 and is adjusted to the corresponding pH value using organic or inorganic acids or bases and which can optionally contain other additives, such as, for example, metal alkoxides of the formula Me(OR)$_x$, preferably tetraethoxysilane. There may be added to such dispersions pyrogenically produced oxides in an amount by weight of from 1 to 65 wt. %, preferably from 1 to 50 wt.%, such as, for example, silicon dioxide, titanium dioxide, aluminium oxide, zirconium dioxide or mixed oxides of the corresponding metals. The corresponding pyrogenic oxides can be added to the dispersion both in the uncompacted state and after preliminary compaction other than that described in DE 196 01 415 A1 has been carried out.

f) solids contents of granulates as claimed in claim 1) of from 1 wt.% to 75 wt.%, preferably from 5 wt.% to 50 wt.%, in an aqueous dispersion which has a pH value of pH = from 1 to 6 or pH = from 8 to 12 and is adjusted to the corresponding pH value using organic or inorganic acids or bases and which can contain other additives permitting improved dispersing, gelling, drying and cleaning as well as sintering of the subsequent sintered material, such as, for example, metal alkoxides of the formula Me(OR)$_x$, preferably tetraethoxysilane. According to the invention there may be added to such dispersions salts or oxides of a metalloid and/or metal.

8. The use of granulates of pyrogenically produced silicon dioxide in the production of a sintered material, especially the sintered material as claimed in claim 1), wherein the granulates used have the following properties:

a) after a downstream compaction step according to DE 196 01 415 A1, the granulates have a tamped density of from 150 g/l to 800 g/l, preferably from 200 to 500 g/l, a granulate particle size of from 10 to 800 $\mu$m and a BET surface area of from 10 to 500 m$^2$/g, preferably from 20 to 130 m$^2$/g;

b) the granulates according to DE 196 01 415 A1 based on pyrogenically produced silicon dioxide have the following physico-chemical data:

mean particle diameter: from 25 to 120 $\mu$m, BET surface area: from 40 to 400 m$^2$/g, pore volume: from 0.5 to 2.5 ml/g, pore distribution: no pores < 5 nm, only meso- and macro-pores, pH value: from 3.6 to 8.5, tamped density: from 220 to 700 g/l.

9. A process for the production of a sintered material, as claimed in claim 1), wherein pyrogenically produced silicon dioxide is compacted and/or granulated in a known manner and converted into a dispersion, the dispersion is gelled and dried, the resulting green body is optionally cleaned and subsequently sintered. Gelling can take place to various forms, such as, for example, formed gel bodies, gel fibres, gelled layers or coatings on a substrate of glass or metal. After being dried and cleaned, the formed gel bodies or gel layers can be sintered in such a manner that a solid formed body or a solid coating is obtained and the resulting sintered body/the sintered surface is fully dense-sintered or is still partially porous.

10. A process for the production of a sintered material as claimed in claim 1), wherein pyrogenically produced silicon dioxide is compacted and/or granulated in a known manner, and then:

a) the granulates as claimed in claim 1), without the aid of a liquid, are introduced into a form or are applied to a surface, a further compacting step is then optionally carried out, in which the formed body or the layer is pressed under a high external mechanical pressure (pressing pressure e.g. from 1 to 120 MPa) in the presence of atmospheric pressure or at reduced pressure, and is compacted further. The formed body obtained after the pressing operation, or the compacted coating, can optionally be cleaned with gaseous substances, such as chlorine or thionyl chloride, at temperatures of from 700 to 1000°C and sintered by means of a sintering step at a temperature of from 1000 to 1800°C, preferably from 1100° to 1600°C, in such a manner that the resulting sintered body/the sintered surface is fully dense-sintered or is still partially porous.

b) granulates as claimed in claim 1) are applied to formed bodies and surfaces by thermal or other high-energy processes, such as, for example, flame spraying, plasma coating or microwave sintering, during which a solid formed body or a solid coating is obtained, and the resulting sintered body/the sintered surface is fully dense-sintered or is still partially porous.

c) the granulates mentioned in claim 1) are brought into any desired form by means of the action of thermal, electric or electromagnetic energy, that is to say, for example, by means of burners, plasma torches or microwave radiation, either before or after heating, and are then sintered in such a manner that the resulting sintered body/the sintered surface is fully dense-sintered or is still partially porous, or the granulates are melted partially or completely, are brought into any desired form before or after heating and are allowed to solidify in that form or are used to coat other materials, such as, for example, glass or metal, and are then optionally after-treated.

11. The use of a sintered material, as claimed in claims 1) to 6), in the production of formed glass bodies, such as, for example, optical fibre preformed bodies (so-called "overcladding tubes" or "core rods"), optical lenses, diffraction gratings, glass crucibles (so-called "crucibles"), electrical insulators, thermal insulators, magnetic insulators, prisms, containers or apparatuses for the chemicals or pharmaceuticals industry, ingots, formed bodies for the electronics industry, glass bars as a raw material for further processing, formed bodies having high requirements as regards accuracy of shape after the process.

12. The use of a sintered material, especially a sintered glass or glass, in the coating of other materials, such as metal, plastics or glass, with layers of materials as claimed in claims 1) to 6).

13. The use of a sintered material, especially the sintered glass or glass as claimed in claims 1) to 6), in the production of fibrous materials or fibres.

14. The use of the granulates as claimed in claim 1) in the production of glasses, especially sintered glasses, ceramics, composite materials, in which the granulates act as a reinforcing filler, as reinforcing fillers in metals, glasses, polymers, elastomers, lacquers or liquids.

15. The use of the dispersion as claimed in claims 2) and 7) in the production of a glass, especially the sintered glass as claimed in claims 1) to 6), and in the polishing of semiconductor materials or electric circuits.

16. Sintered materials according to claim 1, **characterized in that** the granules based on pyrogenically prepared silicon dioxide and having the following physicochemical properties:

| | |
|---|---|
| Average grain size: | 10 to 120 $\mu$m |
| BET surface area: | 40 to 400 $m^2$/g |
| Pore volume: | 0.5 to 2.5 ml/g |
| Pore size distribution: | less than 5 % of the total pore volume exists of pores with a diameter < 5 nm, rest meso- and macropores |
| pH value: | 3.6 to 8.5 |
| Tapped density: | 220 to 700 g/l |

17. Method for the preparation of the granules according to claim 16, **characterised in that** pyrogenically prepared silicon dioxide is dispersed in water and spray dried and the granules obtained are heated at a temperature of from 150 to 1,100°C for a period of 1 to 8 h.

18. Method for the preparation of the granules based on pyrogenically prepared silicon dioxide according to the claim 16, **characterised in that** as pyrogenically prepared silicon dioxide the pyrogenic silicon dioxide powder with

- a BET surface area of 30 to 90 $m^2$/g,
- a DBP index of 80 or less
- a mean aggregate area of less than 25000 $nm^2$,
- a mean aggregate circumference of less than 1000 nm, wherein at least 70% of the aggregates have a circumference of less than 1300 nm is used.

19. Method for the preparation of the granules based on pyrogenically prepared silicon dioxide according to the claim 16, **characterised in that** as pyrogenically prepared silicon dioxide the high-purity pyrogenically prepared silicon dioxide, having a metal content of less than 9 ppm is used.

European Patent
Office

**EUROPEAN SEARCH REPORT**

Application Number

EP 05 00 9479

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 074 513 A (DEGUSSA AG) 7 February 2001 (2001-02-07) | 1-16 | C01B33/18 C03C1/00 C03B19/06 C03B19/10 C03B37/012 |
| Y | * the whole document * | 17-19 | |
| Y | EP 1 304 313 A (DEGUSSA AG) 23 April 2003 (2003-04-23) * paragraphs [0030], [0033] * | 17 | |
| D,Y | WO 2004/054929 A (DEGUSSA AG; MOERTERS, MARTIN; MANGOLD, HELMUT; OSWALD, MONIKA; SCHUMAC) 1 July 2004 (2004-07-01) * claim 1 * | 18 | |
| Y | WO 2005/026068 A (DEGUSSA AG; JACOBSEN, HAUKE; OSWALD, MONIKA; SCHUMACHER, KAI; MOERTERS) 24 March 2005 (2005-03-24) * claim 1 * | 19 | |
| X | EP 0 890 555 A (HERAEUS QUARZGLAS GMBH; HERAEUS QUARZGLAS GMBH & CO. KG) 13 January 1999 (1999-01-13) | 1-7,9, 11-15 | |
| Y | * the whole document * | 8,10 | TECHNICAL FIELDS SEARCHED (Int.Cl.7) |
| Y | EP 0 535 388 A (KONICA CORPORATION; NITTO CHEMICAL INDUSTRY CO., LTD) 7 April 1993 (1993-04-07) * column 5, line 26 - line 33; claims 3,9,12 * | 10 | C01B C03B C03C |
| D,Y | EP 0 725 037 A (DEGUSSA-HUELS AKTIENGESELLSCHAFT) 7 August 1996 (1996-08-07) | 8 | |
| A | * the whole document * | 1-19 | |

The present search report has been drawn up for all claims

| Place of search | Date of completion of the search | Examiner |
|---|---|---|
| The Hague | 18 October 2005 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 9479

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2005

| Patent document cited in search report | | Publication date | Patent family member(s) | | Publication date |
|---|---|---|---|---|---|
| EP 1074513 | A | 07-02-2001 | CA | 2314804 A1 | 03-02-2001 |
| | | | DE | 19936478 A1 | 15-02-2001 |
| | | | JP | 2001072427 A | 21-03-2001 |
| | | | JP | 2004161611 A | 10-06-2004 |
| | | | NO | 20003914 A | 05-02-2001 |
| | | | SG | 85204 A1 | 19-12-2001 |
| | | | US | 2005220692 A1 | 06-10-2005 |
| EP 1304313 | A | 23-04-2003 | JP | 2003137571 A | 14-05-2003 |
| WO 2004054929 | A | 01-07-2004 | AU | 2003290058 A1 | 09-07-2004 |
| | | | DE | 10258857 A1 | 08-07-2004 |
| | | | EP | 1572587 A1 | 14-09-2005 |
| WO 2005026068 | A | 24-03-2005 | DE | 10342828 A1 | 14-04-2005 |
| EP 0890555 | A | 13-01-1999 | DE | 19729505 A1 | 14-01-1999 |
| | | | JP | 11130417 A | 18-05-1999 |
| | | | US | 5979186 A | 09-11-1999 |
| EP 0535388 | A | 07-04-1993 | NONE | | |
| EP 0725037 | A | 07-08-1996 | CA | 2168677 A1 | 05-08-1996 |
| | | | CN | 1134399 A | 30-10-1996 |
| | | | ES | 2154748 T3 | 16-04-2001 |
| | | | IN | 186494 A1 | 15-09-2001 |
| | | | JP | 3095989 B2 | 10-10-2000 |
| | | | JP | 8253309 A | 01-10-1996 |
| | | | KR | 190472 B1 | 01-06-1999 |
| | | | PT | 725037 T | 31-07-2001 |
| | | | SG | 42921 A1 | 17-10-1997 |
| | | | US | 5776240 A | 07-07-1998 |

EPO FORM P0459

For more details about this annex : see Official Journal of the European Patent Office, No. 12/82

**EP 1 717 202 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3001792 C2
- US 5379364 A
- DE 19601415 A1
- EP 05005093 A
- WO 2004054929 A
- DE 10030251
- DE 10030252